# EUROPEAN PATENT APPLICATION

(11) **EP 4 650 017 A1**
(43) Date of publication of application: **19.11.2025**
(21) Application number: 25176980.8
(22) Date of filing: 16.05.2025
(51) Int. Cl.: A63F 13/212, A63F 13/213, A63F 13/52, G06T 15/00

(54) **DISPLAY CONTENT RENDERING ADJUSTMENT IN A VIDEO GAMING SYSTEM**

(30) Priority: 17.05.2024 GB 202407011
(71) Applicant: Sony Interactive Entertainment Inc., Tokyo 108-0075 (JP)
(72) Inventor: CERRATO, Maurizio, London, W1F 7LP (GB); GREEN, Lawrence Martin, London, W1F 7LP (GB); LEUNG, Jun Yen, London, W1F 7LP (GB); CONNOR, Patrick John, London, W1F 7LP (GB); GUPTA, Rajeev, London, W1F 7LP (GB); MONTI, Maria Chiara, London, W1F 7LP (GB)
(74) Representative: Gill Jennings & Every LLP

(57) **Abstract**

Methods and systems for adjusting the rendering of display content by a video gaming system during gameplay are provided. A computer implemented method comprises rendering, by the video gaming system, first display content associated with the gameplay; detecting, by a gaze tracking device of the video gaming system, a blink event of a user; and in response to the detecting the blink event, adjusting, by the video gaming system, a rendering of second display content, wherein the second display content comprises display content associated with the gameplay occurring during the blink event and after display of the first display content, so as to reduce a usage of processing resources of the video gaming system in rendering the second display content.

## Description

### FIELD OF THE INVENTION

The present invention relates to a method of adjusting a rendering of display content by a video gaming system during gameplay.

### BACKGROUND

Modern video gaming systems provide an immersive entertainment experience to a user through the reproduction of sophisticated entertainment content. Whilst increasingly powerful hardware is being provided in such systems to make them capable of reproducing higher quality visual and audible content, the processing required to generate the content is highly intensive of processing resources.

A large portion of the processing cost in a video gaming system during gameplay is made up of the rendering of display content, typically by a graphics processing unit (GPU) of the video gaming system. Whilst the object of this rendering is to maximise perceptual quality of the display content, this is often limited by capabilities of the hardware upon which the rendering is taking place.

In addition to rendering display content, other forms of processing at runtime, whether separate or complementary to the rendering of display content, are becoming increasingly resource intensive. For example, in current technologies where the rendering of display content involves the application of ray tracing, acceleration techniques such as the use of bounding volume hierarchies (BVH) are applied to reduce the complexity of calculations. However, in dynamic gameplay environments such as those having moving characters and/or moving objects, re-building a BVH to adapt to these changes cannot be performed outside of runtime. Whilst BVH building can be performed entirely on the GPU to maximise performance, processing resources in addition to those being used for rendering need to be available for this process.

To control the usage of processing resources, the BVH re-building can be performed at different levels of quality. The higher the quality, the faster the ray tracing effect can be applied as nodes of the BVH are more tightly spaced. However, at higher qualities, the building phase of the BVH is more computationally expensive. For this reason, in current technologies, a BVH update will typically be performed at a half the rate of rendering. Whilst this mechanism reduces the overall processing cost, this can lead to visibly choppy looking animation in ray traced reflections or shadows, reducing the perceptual quality of the display content to the user.

Furthermore, the processing cost of rendering display content is dependent on a multitude of factors, for example, the spatial and temporal resolutions of the display content. Whilst a processing cost can therefore be reduced by adjustment of these factors, this also typically has a negative impact on the perceptual quality of the display content.

Consequently, it is desirable to minimise the usage of processing resources at runtime without impacting the perceptual quality of the display content to the user. Accordingly, there exists a need for a solution to mitigate at least some of the problems associated with rendering display content in video game systems.

### SUMMARY OF INVENTION

In a first aspect of the invention, there is provided a computer implemented method for adjusting a rendering of display content by a video gaming system during gameplay, the method comprising: rendering, by the video gaming system, first display content associated with the gameplay; detecting, by a gaze tracking device of the video gaming system, a blink event of a user; and in response to the detecting the blink event, adjusting, by the video gaming system, a rendering of second display content, wherein the second display content comprises display content associated with the gameplay occurring during the blink event and after display of the first display content, so as to reduce a usage of processing resources of the video gaming system in rendering the second display content.

A user may be understood as a user participating in the gameplay, and a blink event of the user may be understood as the action of a user closing (typically both) their eyes for a short duration (typically estimated to be between 150 and 300 ms) whilst participating in the gameplay. The duration and frequency of blink events typically varies for different users. Using the estimated durations noted above, for a rendering system working at 120hz, a blinking event typically covers between 18 and 36 rendering frames.

During a blink event of the user, there is a time interval where the visual clarity of the user is greatly reduced, and a further time interval where the vision of the user is completely blocked. Consequently, processing resources spent in rendering frames in full quality during these time intervals are therefore wasted.

By adjusting the rendering of second display content during a blink event of the user in comparison to first display content as described above, a usage of processing resources for rendering display content can be reduced without impacting the perceptual quality of the display content to the user. As a result, overall rendering efficiency is improved, and processing costs saved by adjusting the rendering of display content in this manner enables processing resources to be freed up. These resources may then be assigned to other processing tasks to improve performance or left unallocated to reduce a power consumption of the video gaming system.

The first display content may be understood as display content which is to be rendered in a conventional manner and may refer to display content which is intended to be viewed by a user participating in the gameplay. The second display content may be understood as display content which is to be rendered during a a blink event of the user, and as such, may not be viewed at full visual clarity by a user. The second display content may also refer to display content occurring during a blink event of the user which is prevented from being rendered by the video gaming system.

A gaze tracking device may be understood as any device capable of distinguishing between an eye open and eye closed state of a user participating in gameplay and is typically a device also capable of translating eye movements into a data stream that contains information about the eye position and/or gaze direction of the user. Such a gaze tracking device may be embedded into wearable hardware such as a headset or glasses, may be a standalone head-mounted device, or may be a device remote to the user such as one or more sensors or cameras positioned in the vicinity of the user during use. In some embodiments, the gaze tracking device may be provided as part of a virtual reality (VR) headset.

The detecting of a blink event may comprise detecting, by the gaze tracking device, an eye or eyelid motion indicative of the start of a blink event. This may be through detecting the position of imaging landmarks on or in the vicinity of the user's eyes. Other mechanisms may include identifying a white region of the eye and detecting when this region reduces in size or disappears, or applying a machine learning model trained to detect a blink event based on data streamed from the gaze tracking device.

Preferably, the adjusting, by the video gaming system, the rendering of the second display content comprises rendering the second display content at a lower quality than the first display content. A "lower quality" render of display content may be understood as any adjustment to a perceived quality of the display content which results in a reduced processing cost in rendering the display content when compared to the processing cost to render the same display content without performing such an adjustment. In some embodiments, the second display content may be rendered at a lower spatial resolution and/or temporal resolution (frame rate) than the first display content. By reducing a rendering quality of the second display content during the blink event, processing resource usage is reduced without having any perceivable reduction in quality to the user.

In some embodiments, the adjusting, by the video gaming system, the rendering of the second display content comprises rendering the second display content having at least one of: reduced post-processing than the first display content; reduced denoiser quality than the first display content; and reduced volumetric effects than the first display content. Each of post-processing, denoising and volumetric effects are processes which require additional computational resources, and are thus wasted when applied to display content during a blink event of a user. Consequently, reducing these effects in relation to the second display content also has an effect of reducing processing resource usage without having any perceivable reduction in quality to the user.

In some embodiments, reflections in the first display content are rendered using ray tracing. In these embodiments, the adjusting, by the video gaming system, the rendering of the second display content preferably comprises rendering reflections in the second display content using cube mapping. Rendering reflections using a cube mapping technique instead of ray tracing is less computationally expensive, and considering the second display content is display content during a blink event of the user, there is no change in terms of perceived quality.

In some embodiments, the adjusting, by the video gaming system, the rendering of the second display content comprises preventing the video gaming system from rendering the second display content. By not rendering frames corresponding to the second display content which would have been for display during the blink event, processing cost gains may be improved as resources previously assigned to rendering may be made available during the blink event.

The processing resources that are made available by adjusting the rendering of the second display content may be utilized in different ways. In some embodiments, the method comprising assigning at least a portion of processing resources made available by the adjusting the rendering of the second display content to a further processing task. Such a further processing task may typically be at least one of rebuilding a bounding volume hierarchy (BVH) associated with the gameplay, performing image-based lighting, performing reflection probe baking; and executing a generative Al task. In this way, processing resources which would have otherwise been wasted on rendering frames during a blink event of the user are instead assigned to tasks which influence perceptual quality of display content to the user. Consequently, the overall perceptual quality of the display content can be improved using the same hardware.

Preferably, the method further comprises, in response to detecting the blink event, triggering the rebuilding of a bounding volume hierarchy (BVH) associated with the gameplay.

As discussed above, dynamic gameplay environments in which ray tracing is employed, the quality of rebuilding or updating BVHs for acceleration of the ray tracing can have a significant impact on the quality of visual features such as reflections and shadows. By triggering the rebuilding of a BVH upon detecting a blink event, the rebuilding can be performed using additional processing resources made available by adjusting the rendering of the second display content. In this way, a higher quality rebuild of the BVH may be performed, providing improved visual quality.

To maximise the benefits of additional processing resources made available by adjusting the rendering of the second display content, the rebuilding of the BVH triggered in response to detecting the blink event may, in some embodiments, be of a higher quality than a subsequent rebuilding of the BVH. Additionally, in some embodiments, the method comprises adjusting a rate at which a BVH associated with the gameplay is rebuilt.

By performing a higher quality rebuild of the BVH in response to the blink event, a subsequent rebuild, which may not be during a blink event, can be of a lower quality without significantly impacting the quality of ray traced effects. Furthermore, by changing the rate at which a BVH is rebuilt, for example by increasing this rate and performing a subsequent lower quality rebuilds until a next blink event occurs, the quality of a rebuilt BVH on average is higher compared to current technologies, reducing problems associated with artefacts in ray traced reflections or shadows.

In some embodiments, the method comprises preventing at least a portion of processing resources made available by the adjusting the rendering of the second display content from being assigned to a further processing task. By keeping processing resources made available by adjusting the rendering of the second display content unallocated, the overall usage of the processing unit of the video gaming system may be reduced, reducing a power consumption of the video gaming system. These embodiments of the method may be particularly beneficial when applied to video gaming systems that use battery power to run the processing where reducing power consumption will have a positive impact on battery life.

In some embodiments, the gaze tracking device comprises an infra-red camera. Such a camera may be used to capture images and or a video stream of the eye so that it that it is possible to distinguish between eye open and eye closed states. The infra-red camera may be complemented with an infra-red light source to illuminate the eyes and promote corneal reflections to be recorded by the camera.

In some embodiments, the gaze tracking device comprises an event-based camera. This may be in addition to another capture device such as the infra-red camera described above. Event based cameras, such as dynamic vision sensors (DVS), differ from conventional cameras in that they output pixel-level brightness changes instead of intensity frames and may do so asynchronously. This makes them particularly adapted to motion detection and thus a gaze tracking device comprising an event based camera may be able to detect a blink event with reduced latency.

Typically, the second display content comprises a number of frames which is based on a rendering frequency of the video gaming system. In other words, the duration of the second display content, in terms of a number of frames, may be chosen based on the rendering frequency of the video gaming system. By considering this frequency along with an assumption of the length of a blink event, a suitable number of frames corresponding to the second display content in which the rendering is adjusted may be selected so as to obfuscate any perceptual changes in rendering of the display content to the user.

In some embodiments, the second display content is display content associated with a time interval during which it is estimated that a visual clarity of the user reduced, and preferably a time interval during which it is estimated the vision of the user is completely blocked.

A blink event may be characterized in terms of how an opening between the upper and lower eyelids, commonly described as the palpebral aperture (PA), varies over time. As the PA closes, the visual clarity of the user is progressively reduced until the vision is completely blocked when the PA is fully closed. Similarly, as the PA opens, the visual clarity of the user progressively increases until full visual clarity is restored when the PA is fully open. Within a blink event, which as described above is typically between 150ms and 300ms in duration, there exists a period during which visual clarity of the user is reduced, and a further period in which vision of the user is completely blocked. By ensuring that the second display content is display content associated with a time interval in which visual clarity of the user is at least reduced, adjusting the rendering of the second display content will have minimal to no impact on the perceived visual quality of display content observed by the user.

Preferably, a start of the time interval is determined based on an estimated start time of the detected blink event. For example, upon detection of a blink event, the rendering of display content by the video gaming system may be adjusted immediately, or the adjustment may be offset by a preset time delay after the detection of the blink event so as to ensure a visual clarity of the user is reduced and/or vision of the user is blocked when the adjusted rendering of the display content occurs.

Preferably, an end of the time interval is determined by adding a preset duration to an estimated start time of the detected blink event or a start of the time interval. By setting an end of the time interval to be based on either the start of the detected blink event or the start of the time interval, it can be ensured that frames corresponding to the second display content have passed by the time the user regains full visual clarity.

As the length of a blink event may differ between users of the video gaming system, in some embodiments, the preset duration is specific to the user participating in the gameplay. This duration could be selected by the user, or determined by a prior or continual calibration procedure in which an estimate for the blink duration of a user is obtained.

In some embodiments, the method further comprises rendering, by the video gaming system, third display content associated with the gameplay, wherein the third display content comprises display content associated with the gameplay after the second display content. The third display content may correspond to display content rendered after a blink event has occurred and typically once the user has regained full visual clarity. Preferably, the third display content is rendered at a same quality as the first display content such that the user does not observe a change in the rendering of display content before and after a blink event.

In a further aspect of the invention, there is provided a video gaming system comprising: a processing unit configured to render first display content associated with gameplay; a rendering adjustment module configured to adjust a rendering of display content associated with the gameplay; a gaze tracking device configured to detect a blink event of a user; wherein, in response to detecting, by the gaze tracking device, a blink event of a user, the rendering adjustment module is further configured to: adjust a rendering of second display content by the processing unit, wherein the second display content comprises display content associated with the gameplay occurring during the blink event and after display of the first display content, so as to reduce a usage of processing resources of the video gaming system in rendering the second display content.

The rendering adjustment module may be implemented as a method performed by a processing unit of the video gaming system. The rendering adjustment module may be implemented as software run on the video gaming system. For example, a memory of the video gaming system may comprise instructions that, when executed by a processing unit of the video gaming system, cause the video gaming system to carry out the steps of any method described above or herein.

The gaze tracking device may be implemented as hardware of the video gaming system, preferably comprising one or more infra-red cameras and/or one or more event based cameras.

In some embodiments, the processing unit of the video gaming system and/or the entire video gaming system is comprised in one or more battery powered devices. The features described above in relation to the method of the first aspect invention or any implementation of that method may equally be implemented within the video gaming system according to the invention.

In a further aspect of the invention there is provided a computer program comprising instructions that, when executed by a processor, cause a computer to perform the steps of the methods defined above or in the appended claims.

### BRIEF DESCRIPTION OF DRAWINGS

Embodiments of the invention are described below, by way of example only, with reference to the accompanying drawings, in which:
Figure 1 schematically illustrates a blink event of a user participating in gameplay on a video gaming system and a representation of display content rendered by the video gaming system according to the present invention;
Figure 2 schematically illustrates a further blink event of a user participating in gameplay on a video gaming system and a representation of display content rendered by the video gaming system according to the present invention;
Figure 3 schematically illustrates a method for adjusting a rendering of display content by a video gaming system during gameplay according to the present invention;
Figure 4 schematically illustrates a further method for adjusting a rendering of display content by a video gaming system during gameplay according to the present invention;
Figure 5A schematically illustrates a video gaming system according to the present invention; and
Figure 5B schematically illustrates a further video gaming system according to the present invention.

### DETAILED DESCRIPTION

Video gaming systems comprise one or more processing units responsible for processing the audio and visual data assets which are deployed during gameplay dependant on the gameplay events that arise. Although modern video games systems often have high specification hardware, to facilitate the output of high-definition visual and audio output, there are still times when the processing unit is put under stress, particularly when a large number of audio and visual assets must be deployed during particularly intense passages of gameplay. Typically, in current technologies, the rendering of visual assets as display content makes up a large proportion of runtime processing, and it is therefore advantageous to perform this task as efficiently as possible without impacting the perceived quality of the visual content to the user.

The inventors have realised that a significant amount of processing resources are wasted in rendering display content that is displayed whilst a the user interacting in the gameplay is blinking. Considering that the average person blinks around 15 to 20 times each minute, hundreds of frames every minute may be rendered but not observed by the user. The principle of the present invention is therefore to reduce the usage of processing resources in rendering display content by identifying when a blink event has occurred and adjusting the rendering of display content during the blink event accordingly. This mechanism enables processing resources to be made available with minimal to no impact on the user experience since a user may not observe any change in the rendering during a blink event. The processing resources made available through this mechanism may then be used in a manner suitable for the application scenario, which may include assigning them to different processing tasks such as rebuilding a bounding volume hierarchy (BVH) associated with the gameplay, performing image-based lighting, performing reflection probe baking, and executing a generative Al task. Alternatively, the processing resources made available may be left unallocated so as to reduce a power consumption of the processor. The invention may be implemented in a number of different ways.

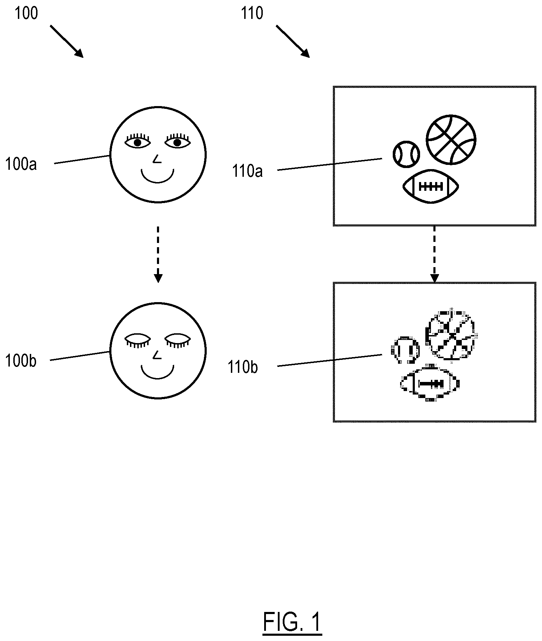

Figure 1 schematically illustrates user 100 participating in gameplay on a video gaming system and a representation of display content 110 rendered by the video gaming system. Initially, the user 100 participating in the gameplay is in an eye open state 100a, and corresponding display content 110a is rendered by the video gaming system whilst the user 100 is in an eye open state 100a. The display content 110a rendered whilst the user is in an eye open state 100a may correspond to first display content described elsewhere herein. The display content 110a may be rendered by the video gaming at a full visual quality, that is, at a quality (e.g. spatial and/or temporal resolution) typical of the capabilities of the video gaming system. The full quality render may also include additional visual enhancements such as post-processing, denoising and volumetric effects, and may comprise visual effects such as shadows and reflections rendered using ray tracing.

After a certain period of interacting with the gameplay, the user will blink and transition into an eye closed state 100b. When this occurs, a gaze tracking device of the video gaming system (not shown) will capture data indicative of a blink event of the user and trigger the rendering of display content by the video gaming system to be adjusted. Consequently, display content 110b, which is displayed during the blink event, is rendered in an adjusted manner compared to the display content 110a. The display content 110b may correspond to second display content described elsewhere herein.

Due to the fact that the display content 110b is content to be displayed during a blink event of the user, the display content 110b is rendered at lower quality than the first display content, illustrated by the pixelation of the display content 110b. Whilst a pixelation may be indicative of a lower spatial resolution, rendering at a lower quality may involve many different aspects of the display content, including but not limited to spatial resolution, temporal resolution, post-processing, denoising and volumetric effects, or indeed any aspect of the display content which, when adjusted, influences the processing resources required. By adjusting the rendering of the display content 110b by modifying one or more of these aspects, processing resources otherwise wasted may be made available for assigning to other processing tasks or left unallocated so as to reduce power consumption.

The point in time at which the rendering of the display content is adjusted and the duration of the adjustment to the rendering of display content may be dependent on a number of different factors. As described above, an object of the present invention is to reduce a usage of processing resources in rendering display content whilst having minimal not no impact on the perceived quality of the display content to the user. As such, it is preferable that display content rendered before and after a blink event is rendered in an equivalent manner, and the rendering adjustment is only applied to display content to be rendered during the blink event, e.g. display content 110b.

To provide minimal impact to the quality perceived by the user, the rendering of display content 110b at a lower quality than display content 110a may be performed only within a time interval that is preferably completely contained within a blink event. In other words, the rendering of display content 110b at a lower quality than display content 110a may be performed during a time interval where it is estimated that the visual clarity of the user is reduced, or in some cases where the vision of the user is completely blocked. Such a time interval may be completely contained within a blink event of the user and is typically shorter than a total blink duration of the user. Furthermore, the start of the time interval is typically determined based on an estimated start time of the detected blink event.

For example, the point at which the rendering of the display content is adjusted may be as soon as possible after detecting a blink event or may be delayed from the start of a blink event by a short offset so as to ensure that when the adjustment occurs, the visual clarity of the user is sufficiently reduced so that the adjustment is not observed. The end of the time interval is typically calculated by adding a preset duration to an estimated start time of the detected blink event or a start of the time interval. As with the start time, the preset duration may be set so as to ensure the end of the period in which the rendering of display content is adjusted falls before full visual clarity of the user is restored. The number of frames corresponding to the display content 110b may be is based on a rendering frequency of the video gaming system.

Referring back to Figure 1, the start time and end time of the time interval in relation to the detection of a blink event in which the display content 110b is rendered at a lower quality than the display content 110a and the duration of the blink event described above may be based on predefined estimates, or may be obtained through a calibration process in which blink events of a user are observed by the gaze tracking device of the video gaming system. In examples according to the latter, the preset duration and/or the offset delay applied may be specific to a particular user.

After the end of the time interval in which the display content 110b is rendered, additional display content may be rendered by the video gaming system, typically at a same level of quality as the display content 110a. This display content may correspond to third display content as described herein.

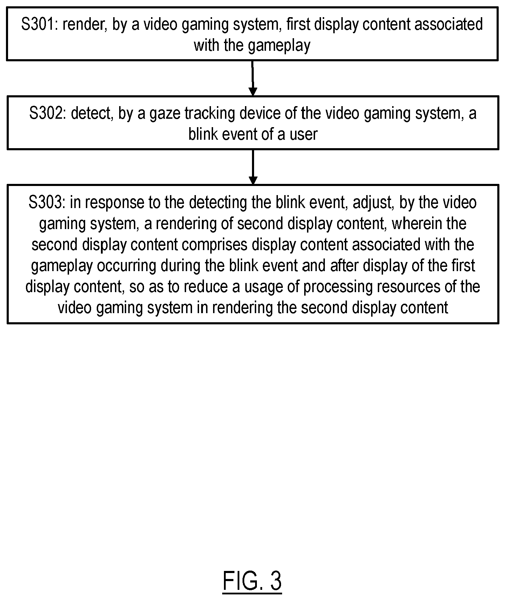

Figure 3 schematically illustrates a method of adjusting the rendering of display content by a video gaming system complementary to the example provided in Figure 1.

At step S301, the video gaming system renders first display content associated with the gameplay.

At step S302, a gaze tracking device of the video gaming system detects a blink event of a user.

At step S303, the video gaming system adjusts a rendering of second display content, wherein the second display content comprises display content associated with the gameplay occurring during the blink event and after display of the first display content, so as to reduce a usage of processing resources of the video gaming system in rendering the second display content.

By applying the method according to Figure 3 to a video gaming system, processor resources wasted in rendering frames not observed by the user can either be allocated to other processing tasks or left unallocated so as to reduce power consumption.

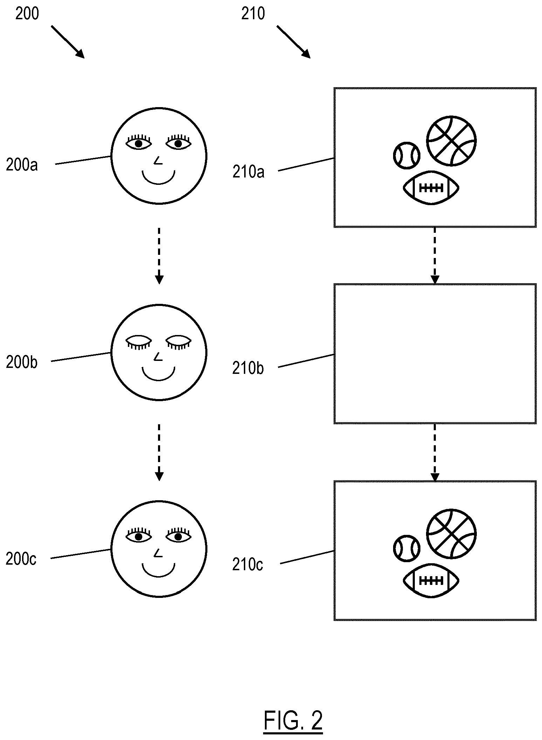

Figure 2 schematically illustrates a further example of a user 200 participating in gameplay on a video gaming system and a representation of display content 210 rendered by the video gaming system.

Figure 2 differs from Figure 1 in that instead of display content being rendered at a lower quality during a blink event of the user, display content during a blink event of the user is prevented from being rendered. Specifically, the user 200 participating in the gameplay is initially in an eye open state 200a, and corresponding display content 210a is rendered by the video gaming system whilst the user 200 is in an eye open state 200a. The display content 210a rendered whilst the user is in an eye open state 200a may correspond to first display content described elsewhere herein. The display content 210a may be rendered by the video gaming at a full visual quality, that is, at a quality (e.g. spatial and/or temporal resolution) typical of the capabilities of the video gaming system. The full quality render may also include additional visual enhancements such as post-processing, denoising and volumetric effects, and may comprise visual effects such as shadows and reflections rendered using ray tracing.

After a certain period of time of interacting with the gameplay, the user will blink and transition into an eye closed state 200b. When this occurs, a gaze tracking device of the video gaming system (not shown) will capture data indicative of a blink event of the user and trigger the rendering of display content by the video gaming system to be adjusted. In this example, the display content 210b is prevented from being rendered during the blink event of the user. The display content 210b may correspond to second display content described elsewhere herein. After the blink event when the user transitions back to an eye open state 200c, display content 210c is rendered by the video gaming system, typically at a same level of quality as display content 210a. By not rendering frames corresponding to display content 210b which would have been for display during the blink event, processing cost gains may be improved as resources previously assigned to rendering may be made available.

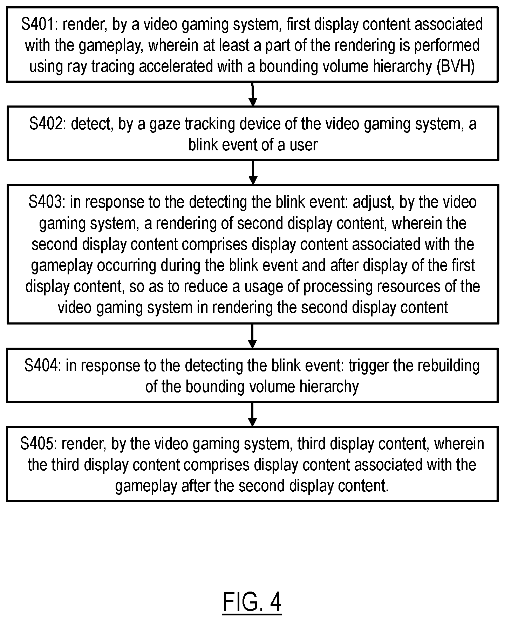

Figure 4 schematically illustrates a further method for adjusting the rendering of display content by a video gaming system. The example of Figure 4 may be applicable when the rendering of display content by the video gaming system includes aspects which are rendered using ray tracing and accelerated using bounding volume hierarchies (BVH).

In dynamic gameplay environments with moveable characters or objects, BVHs must be regularly updated/rebuilt at runtime so as to maintain accurate bounding volumes for the moving objects otherwise effects such as reflections and shadows employing ray tracing may contain artefacts. The process of rebuilding a BVH can be computationally expensive in complex gameplay environments with many objects, and it is therefore advantageous to increase the amount of processing resources available to perform this task. In this example of the invention, processing resources made available by adjusting the rendering of display content during a blink event of the user are made available for rebuilding a BVH at the time of the blink event. This enables the quality and/or the rate of the rebuilding of the BVH to be increased, improving the perceived quality of ray traced visual effects to the user.

At step S401, first display content associated with the gameplay is rendered by the video gaming system, wherein at least a part of the rendering is performed using ray tracing accelerated with a BVH. As described previously, visual features such as reflections and shadows may be rendered using ray tracing techniques employing BVHs to accelerate calculations.

At step S402, a gaze tracking device of the video gaming system detects a blink event of a user.

At step S403, in response to the detecting the blink event: the video gaming system adjusts a rendering of second display content, wherein the second display content comprises display content associated with the gameplay occurring during the blink event and after display of the first display content, so as to reduce a usage of processing resources of the video gaming system in rendering the second display content. Considering that the first display content is rendered at least in part using ray tracing, which is typically computationally expensive, adjusting the rendering of the second display content may involve not rendering any part of the second display content using ray tracing. For example, if reflections in the first display content are rendered using ray tracing, reflections in the second display content may be rendered using a less computationally expensive method such as cube mapping.

Furthermore, at step S404, in response to the detecting the blink event the rebuilding of the bounding volume hierarchy is triggered.

Finally, at step S405, the video gaming system renders third display content, wherein the third display content comprises display content associated with the gameplay after the second display content.

By triggering the rebuilding of the BVH in response to detecting a blink event, typically at a same time the rendering of display content is adjusted, processing resources made available by adjusting the rendering of the display content during the blink event can be utilized in rebuilding the BVH, providing an increased processing capacity for rebuilding the BVH and enabling the BVH to be rebuilt at a higher quality (for example in comparison to a subsequent rebuilding of the BVH that may be triggered not in response to a blink event) and/or higher rate. As a result, display content which is rendered after the blink event that utilizes the rebuilt BVH will have improved ray traced visual effects.

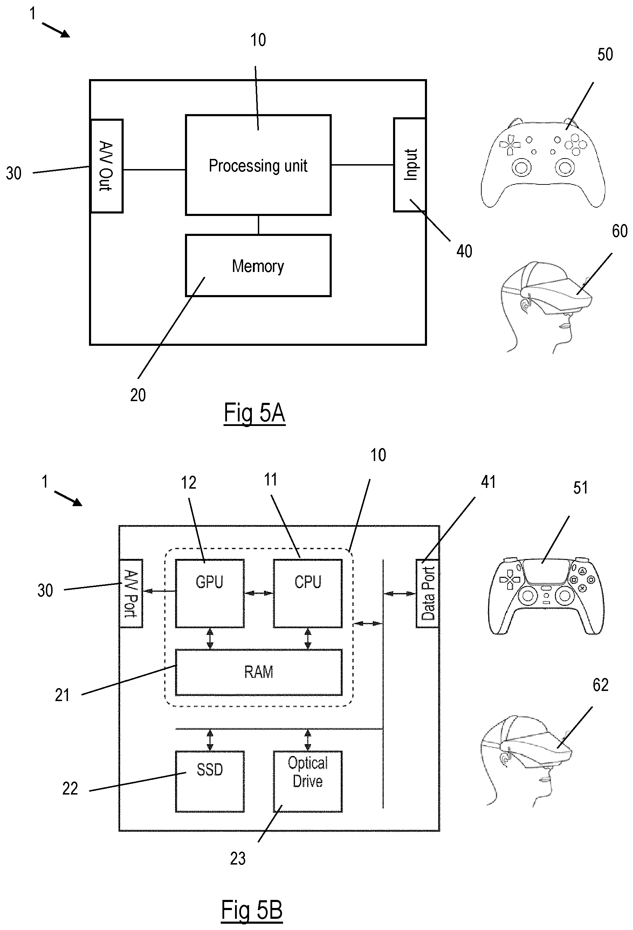

The video gaming system may be a video gaming system 1 illustrated in Figures 5A and 5B.

Figure 5A schematically illustrates a video gaming system 1 according to the present invention. The video gaming system 1 comprises a processing unit 10 configured to render display content associated with gameplay on the video gaming system and out output the display content via an audio-visual output interface 30. The audio-visual interface 30 may comprise a physical port on the video games system 1 such as an HDMI or USB port, a link to an integrated display, or may comprise a wireless interface such as a Bluetooth or Wi-Fi connection. The audio-visual output interface 30 may be a combined interface or consist of separate audio and visual connections. The video gaming system 1 may in some examples include a battery powered processing unit such as in the case of a handheld gaming console.

The video gaming system 1 further comprises a rendering adjustment module (not shown) configured to adjust a rendering of display content associated with the gameplay. The rendering adjustment module may be part of the processing unit 10 in the example of Figure 5A, or may be comprised in a separate processing unit within the video gaming system.

The video gaming system 1 further comprises a gaze tracking device configured to detect a blink event of a user participating in the gameplay. As shown in Figure 5A, the gaze tracking device may be provided as part of a wearable device such as a headset 60 worn by the user during gameplay. However, in other examples, the gaze tracking device may comprise one or more cameras located in the vicinity of the user participating in the gameplay. The gaze tracking device may include one or more infra-red cameras (and optionally infra-red light sources) and/or one or more event-based cameras.

In this example, the system 1 also comprises a local memory 20 which may be used to store data for processing by the processing unit 10 before being output as part of the rendered display content.

The video gaming system 1 may further comprise an input 40 for receiving user input during gameplay. For example, the input 40 may be connected to a controller 50, as illustrated in Figure 5A. The input may comprise any number of input types, for example a disk drive, USB, Bluetooth, or a wireless or wired internet connection allowing the video gaming system to receive data.

After loading a video game and initiating gameplay, the video gaming system 1 outputs rendered display content via the audio-visual output 30 by rendering graphical asset data with the processing unit 10. The audio-visual output 30 is typically connected to a display for displaying the rendered display content and an audio output device for outputting audio. The graphical assets, i.e. graphic data files, corresponding to visual components are stored in memory 20 locally or remotely, before being accessed and processed by the processing unit 10 to be rendered as display content. Thus, the methods illustrated in Figure 3 and Figure 4 may be performed by the video gaming system 1.

Figure 5B schematically illustrates a further exemplary video gaming system on which the above-described methods may be implemented, where one or more of these features may be used within the general system described above. Figure 5B illustrates a schematic diagram illustrating the Sony PlayStation 5 (PS5) architecture and additional hardware forming part of the video gaming system. The system 1 comprises a processing unit 10, which may be a single or multi core processor, for example comprising eight cores as in the PS5. The system 1 of Figure 5B also comprises a graphical processing unit (GPU) 12. The GPU 12 can be physically separate to the CPU 11 or integrated with the CPU as a system-on-a-chip (SoC) as in the PS5. In this example, the processing unit 10 comprises a rendering adjustment module configured to adjust a rendering of display content associated with the gameplay. The system 1 may have separate RAM 21 for each of the CPU and GPU or shared RAM as in the PS5. The RAM 21 can be physically separate or integrated as part of a SoC as in the PS5. Further memory may be provided by a disc 23, either as an external integrated hard drive, or as an external solid-state drive or internal solid-state drive 22 as in the case of the PS5.

User input is typically provided using a handheld controller 51, such as the dual sense control in the case of the PS5. The system 1 may transmit or receive data by one or more data interfaces 41, such as a USB interface, ethernet interface, Wi-Fi interface or Bluetooth interface. As above the audio-visual output from the system 1 is typically provided through one or more AV ports 30, or may be streamed over the one or more data interfaces 41. The methods illustrated in Figure 3 or Figure 4 may be implemented in the same way on the system of Figure 5B. In this case, the method may additionally comprise outputting the rendered first display content and/or the rendered second display content through the one or more AV ports 30 or data interfaces 41. Graphical asset data used in display content rendering may be stored locally in one of the memory components 21, 22, 23 or retrieved from an external storage through the data port 41.

In this example, a gaze tracking device configured to detect a blink event of a user participating in the gameplay is provided in additional hardware such as a headset 62 capable of performing eye tracking. The data from an eye-tracking module of the headset 62 may be streamed over the one or more data interfaces 41 of the system 1 so as to provide eye-tracking data indicative of a blink event to the processing unit 10. The gaze tracking device may include one or more infra-red cameras (and optionally infra-red light sources) and/or one or more event-based cameras.

## Claims

1. A computer-implemented method for adjusting a rendering of display content by a video gaming system during gameplay, the method comprising:
rendering, by the video gaming system, first display content associated with the gameplay;
detecting, by a gaze tracking device of the video gaming system, a blink event of a user; and
in response to the detecting the blink event, adjusting, by the video gaming system, a rendering of second display content, wherein the second display content comprises display content associated with the gameplay occurring during the blink event and after display of the first display content, so as to reduce a usage of processing resources of the video gaming system in rendering the second display content.

2. The method according to claim 1, wherein the adjusting, by the video gaming system, the rendering of the second display content comprises rendering the second display content at a lower quality than the first display content.

3. The method according to claim 1 or claim 2, wherein the adjusting, by the video gaming system, the rendering of the second display content comprises rendering the second display content at one or both of a lower spatial resolution and a lower temporal resolution than the first display content.

4. The method of any preceding claim wherein the adjusting, by the video gaming system, the rendering of the second display content comprises rendering the second display content having at least one of:
reduced post-processing than the first display content;
reduced denoiser quality than the first display content; and
reduced volumetric effects than the first display content.

5. The method according to any preceding claim, wherein reflections in the first display content are rendered using ray tracing, and the adjusting, by the video gaming system, the rendering of the second display content comprises rendering reflections in the second display content using cube mapping.

6. The method according to claim 1, wherein the adjusting, by the video gaming system, the rendering of the second display comprises preventing the video gaming system from rendering the second display content.

7. The method according to any preceding claim, further comprising assigning at least a portion of processing resources made available by the adjusting the rendering of the second display content to a further processing task, wherein the further processing task comprises at least one of:
rebuilding a bounding volume hierarchy (BVH) associated with the gameplay;
performing image-based lighting;
performing reflection probe baking; and
executing a generative Al task.

8. The method according to any preceding claim, further comprising, in response to detecting the blink event, triggering a rebuilding of a bounding volume hierarchy (BVH) associated with the gameplay.

9. The method according to claim 8, wherein the rebuilding of the BVH triggered in response to detecting the blink event is of a higher quality than a subsequent rebuilding of the BVH.

10. The method according to any preceding claim, further comprising, in response to detecting the blink event, adjusting a rate at which a bounding volume hierarchy (BVH) associated with the gameplay is rebuilt.

11. The method according to any preceding claim, further comprising preventing at least a portion of processing resources made available by the adjusting the rendering of the second display content from being assigned to a further processing task.

12. The method according to any preceding claim, wherein the gaze tracking device comprises at least one of an infra-red camera and an event-based camera.

13. The method according to any preceding claim, wherein the second display content is display content associated with a time interval during which it is estimated that a visual clarity of the user reduced, and preferably a time interval during which it is estimated the vision of the user is completely blocked, wherein a start of the time interval is determined based on an estimated start time of the detected blink event, wherein an end of the time interval is determined by adding a preset duration to an estimated start time of the detected blink event or a start of the time interval, and wherein the preset duration is specific to the user participating in the gameplay.

14. The method according to any preceding claim further comprising rendering, by the video gaming system, third display content, wherein the third display content comprises display content associated with the gameplay after the second display content, preferably wherein the third display content is rendered at a same quality as the first display content.

15. A video gaming system comprising:
a processing unit configured to render first display content associated with gameplay;
a rendering adjustment module configured to adjust a rendering of display content associated with the gameplay;
a gaze tracking device configured to detect a blink event of a user;
wherein, in response to detecting, by the gaze tracking device, a blink event of a user, the rendering adjustment module is further configured to:
adjust a rendering of second display content by the processing unit, wherein the second display content comprises display content associated with the gameplay occurring during the blink event and after display of the first display content, so as to reduce a usage of processing resources of the video gaming system in rendering the second display content.
